# EUROPEAN PATENT APPLICATION

(11) **EP 2 254 306 A1**
(43) Date of publication of application: **24.11.2010**
(21) Application number: 08714916.7
(22) Date of filing: 07.03.2008
(51) Int. Cl.: H04L 29/06

(54) **AN MS AND THE METHOD FOR INTERACTING WITH THE BS BEING COMPATIBLE WITH THE FIRST PROTOCOL AND THE SECOND PROTOCOL**

(71) Applicant: Alcatel Lucent, 75008 Paris (FR)
(72) Inventor: ZOU, Wei, Shanghai 201206 (CN); SHEN, Gang, Shanghai 201206 (CN); LIU, Jimin, Shanghai 201206 (CN); ZHENG, Wu, Shanghai 201206 (CN)
(74) Representative: Kohler Schmid Möbus
(86) International application number: PCT/CN2008/000463
(87) International publication number: WO 2009/109070

(57) **Abstract**

This invention provides a Mobile Station (MS) interworking with a Base Station (BS) which is compatible with a first protocol and a second protocol, the MS comprising: a synchronizing unit for synchronizing with the BS; a broadcast information obtaining unit for obtaining first protocol broadcast information from the BS; an operation mode selecting unit for selecting a first operation mode or a second operation mode according to whether the MS supports the first protocol or the second protocol, wherein when the MS supports the second protocol, second protocol MAP information is obtained according to the first protocol broadcast information, and data are transmitted via a prescribed channel to the BS according to the second protocol MAP information. Also, the present invention provides a method of MS network entry to communicate with a BS and a method of forming an IEEE 802.16m frame compatible with IEEE 802.16e frame. According to this invention, an IEEE 802.16e MS can access an IEEE 802.16m BS, and an IEEE 802.16m MS can also access an IEEE 802.16m BS. Even if an MS and a BS operate under different protocols, the MS can enter a network to perform communication with the BS.

## Description

### FIELD OF THE INVENTION

This invention relates to a mobile communication field, more specifically, relates to a Mobile Station (MS) for interworking with a Base Station (BS) which is compatible with a first protocol and a second protocol and a method of MS network entry.

### BACKGROUND OF THE INVENTION

Recently, a new task group, IEEE 802.16m, has been set up for the standard amendments of the IEEE 802.16 Wireless MAN-OFDMA specification to provide an advanced air interface for operation in licensed bands. It meets the cellular layer requirements of the next generation mobile networks. The purpose of IEEE802.16m is to provide performance improvements necessary to support future advanced services and applications, to realize a spectral efficiency greater than 6.5 bps/Hz in downlink and greater than 2.8 bps/Hz in uplink.

An important aspect of IEEE 802.16m requirements lies in legacy support of IEEE 802.16e. It is required that IEEE 802.16m shall provide continuing support and interoperability for legacy IEEE 802.16e Wireless MAN-OFDMA equipment, including MSs and BSs. Specifically, the functions and protocol procedures enabled in IEEE 802.16m shall support the features, functions and protocol procedures employed by legacy IEEE 802.16e equipment. Also, IEEE 802.16m shall provide the ability to turn-off legacy support of IEEE 802.16e. It shall be noted that this continuing support shall be limited to only a "harmonized sub-set" of Wireless MAN-OFDMA features, functions and protocol procedures captured by the WiMAX Forum, Mobile System Profile, Release 1.0 (Revision 1.4.0: 2007-05-02, Reference [1]).

The following are detailed backward compatibility requirements:
- An IEEE 802.16m MS shall be able to operate with a legacy BS, at a level of performance equivalent to that of a legacy IEEE 802.16e MS.
- IEEE 802.16m based Systems and Wireless-OFDMA Reference System shall be able to operate on the same RF carrier, with the same channel bandwidth; and shall be also able to operate on the same RF carrier with different channel bandwidths.
- An IEEE 802.16m BS shall support a mix of IEEE 802.16m and legacy IEEE 802.16e MSs when both are operating on the same RF carrier. The performance of such a mix should be improved with the fraction of IEEE 802.16m MSs attached to the BS.
- An IEEE 802.16m BS shall support seamless handover of a legacy IEEE 802.16e MS to and from legacy IEEE 802.16e BS.
- An IEEE 802.16m BS shall be able to support a legacy IEEE 802.16e MS while also supporting IEEE 802.16m MSs, at a level of performance equivalent of what a legacy IEEE 802.16e BS provides to a legacy IEEE 802.16e MS when operating on the same RF carrier.

Currently, "Draft IEEE 802.16m Requirements" has been issued. However, there's no mature solution for legacy IEEE 802.16e support.

### SUMMARY OF THE INVENTION

Preamble has been carefully designed in IEEE 802.16e, which plays an important role in both time and frequency synchronization. Also, because IEEE 802.16m system must support an IEEE 802.16e MS, an IEEE 802.16e preamble is required to be contained in an IEEE 802.16m frame (even though some frequency-domain extension of the preamble might exist). IEEE 802.16m will reuse the preamble specified in IEEE 802.16e.

Due to that IEEE 802.16m aims to be designed as an independent set of protocol, a specific zone should be allocated to it. Hence, the whole IEEE 802.16m frame will be divided into two parts: IEEE 802.16e zone and IEEE 802.16m zone. In IEEE 802.16e zone, traditional IEEE 802.16e protocol is operating, while a totally new protocol of IEEE 802.16m will be operated in IEEE 802.16m zone. In order to inform the IEEE 802.16m MS the existence of IEEE 802.16m zone, some specific design must exist in traditional IEEE 802.16e broadcasting channel.

A simple method is to add one field in IEEE 802.16e broadcasting messages so that the position of an IEEE 802.16m MAP can be identified by the IEEE 802.16m MS. This can be realized by several measures:
✧ using the reserved bits in traditional FCH field of IEEE 802.16e,
✧ designing some new extension MAP IE in IEEE 802.16e, and/ or
✧ adding a/ several field(s) in the IEEE 802.16e DCD/UCD (Downlink Channel Description/ Uplink Channel Description) messages.

According to the first aspect of the present invention, it is provided a Mobile Station (MS) interworking with a Base Station (BS) which is compatible with a first protocol and a second protocol, the MS comprising:
a synchronizing unit for synchronizing with the BS;
a broadcast information obtaining unit for obtaining first protocol broadcast information from the BS;
an operation mode selecting unit for selecting a first operation mode or a second operation mode according to whether the MS supports the first protocol or the second protocol,
wherein when the MS supports the second protocol, second protocol MAP information is obtained according to the first protocol broadcast information, and data are transmitted via a prescribed channel to the BS according to the second protocol MAP information.

According to the second aspect of the present invention, it is provided a method for an MS to perform network entry and communications with a BS which is compatible with a first protocol and a second protocol, the method comprising:
synchronizing, by the MS, with the BS;
obtaining, by the MS, first protocol broadcast information from the BS;
selecting, by the MS, a first operation mode or a second operation mode according to whether the MS supports the first protocol or the second protocol,
wherein when the MS supports the second protocol, the MS obtains second protocol MAP information according to the first protocol broadcast information, and transmits data via a prescribed channel to the BS according to the second protocol MAP information.

According to the third aspect of the present invention, it is provided a method of forming an IEEE 802.16m frame compatible with IEEE 802.16e, comprising:
reusing a preamble in an IEEE 802.16e frame;
combining an IEEE 802.16e zone and an IEEE 802.16m zone into an uplink frame and a downlink frame, respectively;
providing in an FCH of the IEEE 802.16e zone of the downlink frame a pointer pointing to IEEE 802.16m MAP of the IEEE 802.16m zone of the downlink frame.

### BRIEF DESCRIPTION OF THE DRAWINGS

These and various other features as well as advantages which characterize the present invention will be apparent from reading the following detailed description and a review of the associated drawings:
Fig. 1 is a schematic block diagram showing the structure of the IEEE 802.16m frame according to this invention;
Fig. 2 shows the FCH format in the IEEE 802.16e frame;
Fig. 3 shows a schematic block diagram of an MS for communicating with a BS which is compatible with a first protocol and a second protocol according to this invention; and
Fig. 4 shows a flowchart of MS network entry according to this invention.

### DETAILED DESCRIPTION OF PREFERRED EMBODIMENTS

Hereinafter, a preferred embodiment of the present invention will be described with reference to the accompanying drawings. In the following description of the present invention, a detailed description of known functions and configurations incorporated herein will be omitted when it may make the subject matter of the present invention rather unclear.

According to the legacy support requirements, an IEEE 802.16e MS shall be able to access an IEEE 802.16m BS, and an IEEE 802.16m MS shall also be able to access an IEEE 802.16e BS. This invention proposes a solution of the IEEE 802.16m protocol which provides support to a device using the legacy IEEE 802.16e protocol. Via the solution, no matter an MS is an IEEE 802.16e MS or an IEEE 802.16m MS, it can communicate with both an IEEE 802.16e BS and IEEE 802.16m BS. Hence, IEEE 802.16m BS and MS shall have full support for all the IEEE 802.16e features. In order to reduce cost, some of the IEEE 802.16e features will be reused in the IEEE 802.16m standard.

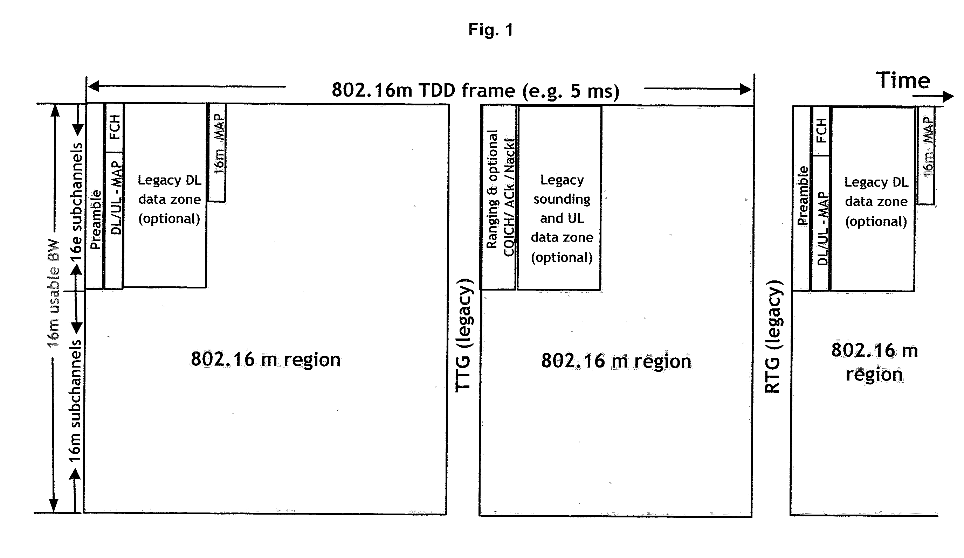

First, Fig. 1 is referred to introduce the structure of the IEEE 802.16m frame according to this invention.

This invention reuses the preamble of the IEEE 802.16e frame. A method of forming an IEEE 802.16m frame which compatible with IEEE 802.16e frame, comprises (1) reusing the preamble in the IEEE 802.16e frame; (2) combining an 802.16e zone and an 802.16m zone into a uplink sub-frame and a downlink sub-frame, respectively; (3) setting a pointer in the FCH field in the 802.16e zone of the downlink sub-frame pointing to the 802.16m MAP in the 802.16m zone of the downlink sub-frame. Referring to Fig. 1, an IEEE 802.16m frame is divided into a downlink sub-frame and an uplink sub-frame with the protecting slot TTG (Tx/Rx Transition Gap) embedded. The protection slot between an uplink sub-frame and a downlink sub-frame is an RTG (Rx/Tx Transition Gap). A downlink sub-frame is divided into two zones: a 16e zone and a 16m zone. In the 16e zone, traditional IEEE 802.16e protocol is operating, while a totally new protocol of IEEE 802.16m will be operated in the 16m zone. The uplink sub-frame is also divided into two zones: a 16e zone and a 16m zone.

Now the IEEE 802.16m frame will be described with reference to the downlink sub-frame. The 16e zone comprises a preamble, FCH, DL/UL MAP, a legacy DL data zone. The preamble is used for synchronization; the Frame Control Header (FCH) comprises the control information of the current frame, such as the length of DL_MAP (downlink map) and UL_MAP (uplink map), encoding scheme and the used sub-channel, etc. The DL_MAP and UL_MAP specify the detail information in the downlink and uplink sub-frame.

The 16m zone comprises an IEEE 802.16m MAP and an IEEE 802.16m zone. The available sources assigned to each MS are specified in the IEEE 802.16m zone. Alternatively, IEEE 802.16m zone can be divided into short DL and UL sub-frames (with embedded TTG and RTG gaps). Therefore, the response time of the transmission between an MS and a BS becomes faster. But, TTG/RTG overhead can be excessive with this approach.

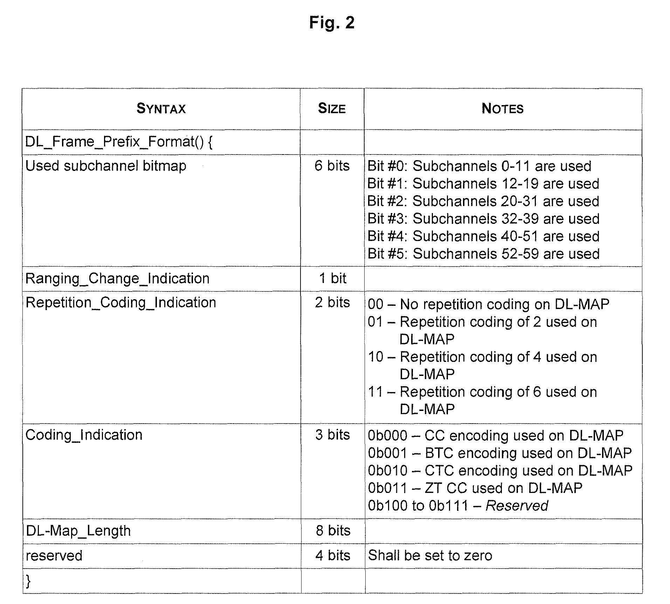

In the FCH field in the IEEE 802.16e, reserved bits will be used as a pointer pointing to the IEEE 802.16m MAP. That IEEE 802.16m MAP will be defined by the detailed frequency-time resource occupied by IEEE 802.16m. Fig. 2 shows the FCH format in the IEEE 802.16e frame. There are 4 bits reserved after the DL_MAP_Length field. In the present invention, these 4 reserved bits are defined into a pointer pointing to the IEEE 802.16m MAP. Alternatively, these 4 reserved bits can be also used as a label of 16m-support capability.

Although, this invention uses the FCH filed in the IEEE 802.16e to point to the IEEE 802.16m MAP, the IEEE 802.16m MAP can be defined by using some new extension MAP IEs (Information Elements) of IEEE 802.16e, or adding a/several field(s) in DCD/UCD messages. Additionally, the defined 16m zone can either be only a part of the traditional 16e frame with the same bandwidth, or occupy a much bigger bandwidth than that. In the 16m zone, some specifically new-designed pilots will help the system to perform necessary synchronization and channel estimation.

In this frame format, all the IEEE 802.16e network entry process including ranging procedures can be reused without losing the freedom of IEEE 802.16m-protocol design. Also, legacy IEEE 802.16e devices are fully compatible without any change. For an IEEE 802.16m BS with 2 transmission antennas, the two antennas will transmit the same contents in the IEEE 802.16e zone, and MIMO technology can be applied in the IEEE 802.16m zone.

Since the IEEE 802.16m frame is used by this invention as the extension of the IEEE 802.16e frame, even if an MS and a BS operate together under different protocols, the MS can entry network and perform communication with the BS. That is to say, an IEEE 802.16e MS can access an IEEE 802.16m BS, and an IEEE 802.16m MS can also access an IEEE 802.16m BS.

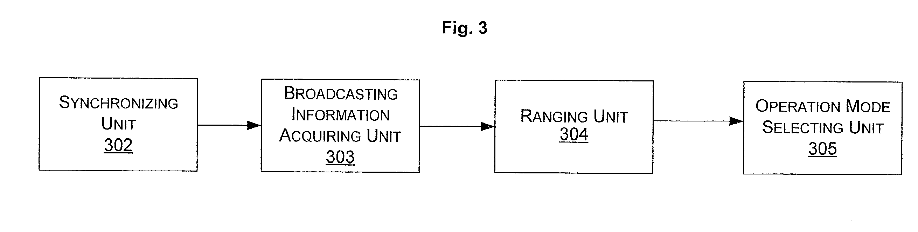

Fig. 3 shows a schematic block diagram of an MS according to this invention. The MS may be an IEEE 802.16m MS or an IEEE 802.16e MS, and the BS of the network to which the MS is to be entering supports IEEE 802.16m.

Referring to Fig. 3, the MS comprises a receiving unit (not shown) for receiving data from the BS; a transmitting unit (not shown) for transmitting data to the BS; a synchronizing unit 302 for scanning channel and searching preamble to perform the synchronization with the BS; a broadcasting information acquiring unit 303 which acquires the IEEE 802.16e broadcasting information from the BS; a ranging unit 304 which performs the adjustment of power, time delay and frequency shift of the MS by ranging; an operation mode selecting unit 305 which selects an IEEE 802.16e mode or an IEEE 802.16m mode according to the protocol the MS supports, wherein when the MS supports the IEEE 802.16m protocol, the 16m MAP information is obtained from the IEEE 802.16e broadcasting information from the BS. Although Fig. 3 shows that the MS includes a ranging unit 304, the MS may not include such unit.

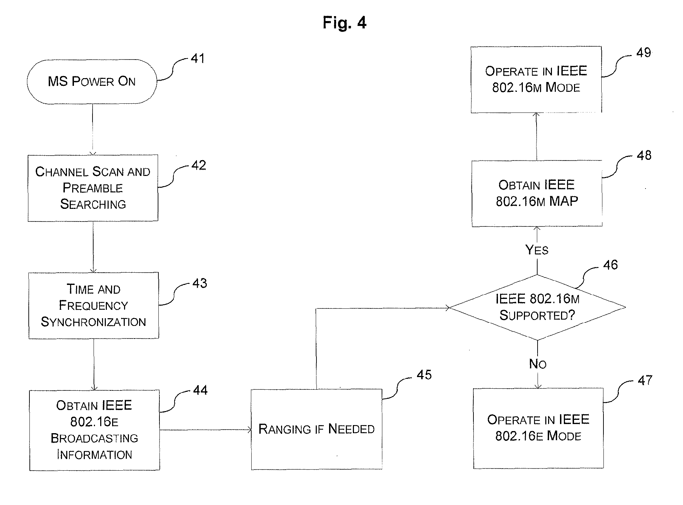

Now the MS network entry method will be illustrated with reference to Figs. 3 and 4. Referring to Fig. 4, at step 41, the MS is powered on. At step 42, the synchronizing unit 302 performs channel scanning and preamble searching. At step 43, the synchronizing unit 302 performs the time and frequency synchronization with the BS according to the synchronization sequences in the searched preamble. Thereafter, at step 44, the broadcasting information acquiring unit 303 acquires the IEEE 802.16e broadcasting information from the BS. If the ranging is needed, then at step 45, the ranging unit 304 performs the ranging procedure for adjustment of power, time delay and frequency shift of the MS. At step 46, the operation mode selecting unit 305 of the MS determines that whether IEEE 802.16m is supported according to the operation protocol adopted by itself. If the MS supports the IEEE 802.16m, then at step 48, the MS obtains the IEEE 802.16m MAP from the pointer in the FCH contained in the broadcasting information obtained by the MS from the BS, and at step 49, the MS operates under the IEEE 802.16m mode, and transmits data to the BS by using the bursts in the 16m zone in the IEEE 802.16m frame. Otherwise, at step 47, MS obtains the DL/UL MAP in the 16e zone in the IEEE 802.16m frame, so it operates under IEEE 802.16e mode, and transmits data to the BS by using the burst (legacy DL data zone) defined in the IEEE 802.16m frame.

While specific embodiment and applications of the present invention have been illustrated and described, it is to be understood that the invention is not limited to the description disclosed herein. It will be apparent to those skilled in the art that various modifications, changes, and variations may be made to the present invention disclosed herein without departing from the spirit and scope of the invention.

## Claims

1. A Mobile Station (MS) interworking with a Base Station (BS) which is compatible with a first protocol and a second protocol, the MS comprising:
a synchronizing unit for synchronizing with the BS;
a broadcast information obtaining unit for obtaining first protocol broadcast information from the BS;
an operation mode selecting unit for selecting a first operation mode or a second operation mode according to whether the MS supports the first protocol or the second protocol,
wherein when the MS supports the second protocol, second protocol MAP information is obtained according to the first protocol broadcast information, and data are transmitted via a prescribed channel to the BS according to the second protocol MAP information.

2. The MS according to claim 1, further comprising:
a ranging unit for adjusting power, timing and frequency offset.

3. The MS according to claim 1, wherein the first protocol is IEEE 802.16e, and the second protocol is IEEE 802.16m.

4. The MS according to claim 3, wherein an IEEE 802.16m frame reuses a preamble in an IEEE 802.16e frame.

5. The MS according to claim 4, wherein the IEEE 802.16m frame comprises an IEEE 802.16e zone and an IEEE 802.16m zone.

6. The MS according to claim 5, wherein the IEEE 802.16m zone contains a plurality of DL and UL sub-frames with embedded TTG and RTG gaps.

7. The MS according to claim 5, wherein an FCH field in the IEEE 802.16e contains a pointer pointing to IEEE 802.16m MAP of the IEEE 802.16m zone.

8. The MS according to claim 5, wherein an extended MAP IE or DCD/UCD message contains a pointer pointing to IEEE 802.16m MAP of the IEEE 802.16m zone.

9. A method for an MS to perform network entry and communications with a BS which is compatible with a first protocol and a second protocol, the method comprising:
synchronizing, by the MS, with the BS;
obtaining, by the MS, first protocol broadcast information from the BS;
selecting, by the MS, a first operation mode or a second operation mode according to whether the MS supports the first protocol or the second protocol,
wherein when the MS supports the second protocol, the MS obtains second protocol MAP information according to the first protocol broadcast information, and transmits data via a prescribed channel to the BS according to the second protocol MAP information.

10. The method according to claim 9, further comprising a ranging step after the first protocol broadcast information is obtained.

11. The method according to claim 9, wherein the first protocol is IEEE 802.16e, and the second protocol is IEEE 802.16m.

12. The method according to claim 11, wherein an IEEE 802.16m frame reuses a preamble in an IEEE 802.16e frame.

13. The method according to claim 12, wherein the IEEE 802.16m frame comprises an IEEE 802.16e zone and an IEEE 802.16m zone.

14. The method according to claim 13, wherein the IEEE 802.16m zone contains a plurality of DL and UL sub-frames with embedded TTG and RTG gaps.

15. The method according to claim 13, wherein an FCH field in the IEEE 802.16e contains a pointer pointing to IEEE 802.16m MAP of the IEEE 802.16m zone.

16. The method according to claim 13, wherein an extended MAP IE or DCD/UCD message contains a pointer pointing to IEEE 802.16m MAP of the IEEE 802.16m zone.

17. A method of forming an IEEE 802.16m frame compatible with IEEE 802.16e, comprising:
reusing a preamble in an IEEE 802.16e frame;
combining an IEEE 802.16e zone and an IEEE 802.16m zone into an uplink frame and a downlink frame, respectively;
providing in an FCH of the IEEE 802.16e zone of the downlink frame a pointer pointing to IEEE 802.16m MAP of the IEEE 802.16m zone of the downlink frame.
